# EUROPÄISCHE PATENTSCHRIFT

(11) **EP 0 534 942 B1**
(45) Veröffentlichungstag und Bekanntmachung des Hinweises auf die Patenterteilung: **02.03.1994**
(21) Anmeldenummer: 89912433.3
(22) Anmeldetag: 27.10.1989
(51) Int. Cl.: B65G 47/86, B07C 5/36, B67C 7/00

(54) **SORTIERSTERN FÜR GEFÄSSBEHANDLUNGSMASCHINEN**
STAR-SHAPED APPARATUS FOR CONTAINER-HANDLING MACHINES
ETOILE DE TRIAGE POUR MACHINES DE TRAITEMENT DE RECIPIENTS

(30) Priorität: 09.11.1988 DE 3838007
(43) Veröffentlichungstag der Anmeldung: 07.04.1993
(73) Patentinhaber: KRONES AG Hermann Kronseder Maschinenfabrik, D-93068 Neutraubling (DE)
(72) Erfinder: LÖLL, Josef, D-8400 Regensburg (DE)
(86) Internationale Anmeldenummer: EP8901281
(87) Internationale Veröffentlichungsnummer: WO9005102

(56) Entgegenhaltungen:
- DE-A- 2 340 796
- DE-A- 2 806 058
- DE-A- 2 820 315

## Beschreibung

Die Erfindung betrifft einen Sortierstern für Gefäßbehandlungsmaschinen mit einer drehbar antreibbaren Sternplatte und an deren äußerden Peripherie angeordneten Drehriegelvorrichtungen mit je einem an der Sternplatte befestigten Gehäuse, das mit einer zur Peripherie der Sternplatte weisenden Lagerbohrung versehen ist, einem in der Lagerbohrung zwischen zwei Endstellungen um etwa 90 Grad drehbaren Schaft, einem drehfest am äußeren, aus dem Gehäuse und der äußeren Peripherie der Sternplatte herausragenden Schaftende befestigten Drehriegel und einer am Schaft angreifenden, mittels einer Betätigungseinrichtung zwangsbetätigbaren Schalteinrichtung zum Drehen des Schaftes zwischen beiden Endstellungen.

Derartige Drehriegelvorrichtungen sind aus der Praxis bekannt (DE-U- 85 32 911.8). Sie sind zwischen den in der äußeren Peripherie der Sternplatte ausgebildeten Aussparungen oder Taschen zur Aufnahme von Gefäßen angeordnet und durch Verschwenken des Schaftes und damit des Drehriegels von der einen zur anderen Endstellung in eine Außerbetriebs- und eine Betriebsstellung einstellbar. In der ersteren Stellung erstreckt sich der Drehriegel im wesentlichen normal zur Ebene der Sternplatte, in der letzteren Stellung hingegen im wesentlichen parallel zur Ebene der Sternplatte, eine zugeordnete Tasche derart verschließend, daß ein darin befindliches Gefäß zurückgehalten und auf diese Weise mit dem sich drehenden Sortierstern transportiert wird. Befindet sich der Drehriegel in der Außerbetriebstellung, dann kann das zugeordnete Gefäß aus der Tasche austreten, beispielsweise mit Hilfe eines tangential zum Sortierstern verlaufenden Abförderbandes.

Die Schalteinrichtung der aus der Praxis bekannten Drehriegelvorrichtung ist als einteiliger Schalthebel ausgebildet, der mit zwei rechtwinklig zueinander angeordneten Schaltarmen am inneren Schaftende befestigt ist. Die Drehriegelvorrichtung ist derart an der Sternplatte befestigt, daß in der einen Endstellung ein Schaltarm nach unten und in der anderen Endstellung der jeweils andere Schaltarm nach oben aus dem Gehäuse im wesentlichen normal zur Ebene der Sternplatte herausragt. Die Betätigungseinrichtung zur Betätigung der Schalthebel umfaßt zwei Nocken, je einen ober- und unterhalb der Sternplatte, die in die bei Drehung des Sortiersterns durchlaufende Bewegungsbahn des zu betätigenden, aus dem Gehäuse herausragenden Schaltarms eingreifen. Auf diese Weise wird bei Drehung des Sortiersterns der in einer Endstellung aus dem Gehäuse, beispielsweise nach oben herausragende, auf den obenliegenden Nocken auftreffende Schaltarm und damit der Drehriegel sowie der jeweils andere Schaltarm in die entgegengesetzte Endstellung verschwenkt, in der der vorher nach oben herausragende Schaltarm im wesentlichen parallel zur Ebene der Sternplatte angeordnet ist und der andere, vorher im wesentlichen parallel zur Ebene der Sternplatte angeordnete Schaltarm aus dem Gehäuse nach unten herausragt, um bei Umschaltung des Drehriegels vom untenliegenden Nocken beaufschlagt und wieder in seine vorherige Stellung zurückverschwenkt zu werden.

Entsprechend der Anordnung der beiden Schaltarme ist der eine Nocken unterhalb und der andere oberhalb des Sortiersterns mittels je einer Halterung in fixierter Stellung gehalten. Mindestens einer der beiden Nocken ist durch eine Steuereinrichtung gezielt selektiv betätigbar, während der zweite Nocken starr in gleichbleibender Position gehalten werden kann. Die Halterung des unteren Nockens ist starr mit dem Gehäuse der Antriebswelle für den Sortierstern verbunden. Der obere Nocken ist hingegen an einer speziellen Steuerplatte befestigt, die mittels Kugellager drehbar auf einer am freien Ende der Antriebswelle befestigten Mitnehmernabe zur Aufnahme der Sternplatte gelagert ist. Durch einen mit dem Maschinenrahmen verbundenen Haltearm ist die Steuerplatte gegen Verdrehen gesichert. Bei Umstellung von einer Gefäßgröße auf eine andere muß zum Auswechseln des Sortiersterns zuerst die Verbindung zwischen dem am Maschinenrahmen befestigten Haltearm und der Steuerplatte gelöst werden. Sodann ist ein Handrad mit einer Schraubspindel zu lösen, um den Sortierstern mitsamt der relativ schweren Steuerplatte von der Mitnehmernabe abnehmen zu können. Insgesamt ist die aus der Praxis bekannte Drehriegelvorrichtung vergleichsweise sehr aufwendig in der Konstruktion und damit in den Kosten und läßt sich nur sehr umständlich handhaben.

Es ist Aufgabe der Erfindung, einen Sortierstern der eingangs genannten Art so weiterzubilden, daß er einfacher zu handhaben ist.

Erfindungsgemäß wird diese Aufgabe dadurch gelöst, daß die Schalteinrichtung von nur einer Seite, nämlich der Antriebsseite der Sternplatte her betätigbar ist. Dem entsprechend ist die Betätigungseinrichtung für die Schalteinrichtung nur auf der Antriebsseite des Sortiersterns angeordnet. Auf diese Weise entfällt die Anbringung des Nockens und der zugehörigen Halterung auf der der Betätigungseinrichtung gegenüberliegenden Seite. Der bisher wegen des Nockens und seiner Halterung behinderte Zugang zum Sortierstern von dieser Seite her ist nunmehr frei, so daß z.B. Einstellarbeiten und kleinere Reparaturen erheblich einfacher und schneller an dem auf seiner Antriebswelle montierten Sortierstern durchgeführt werden können.

Durch die ausschließliche Betätigung der Schalteinrichtung von der Antriebsseite des Sortiersterns her entfällt vorteilhafterweise die bisher den oberen Nocken tragende, schwere Steuerplatte und damit deren Haltearm sowie die Kugellagerung derselben auf der zu diesem Zweck speziell ausgebildeten Mitnehmernabe. Dies ist nicht nur eine konstruktive Vereinfachung, sondern bedeutet auch eine erheblich einfachere Handhabung des Sortiersterns und damit wesentlich kürzere Umbauzeiten bei Umstellung von einer Gefäßgröße auf eine andere. Die Erfindung ermöglicht außerdem die Verwendung der aus dem DE-GM 87 15 020 bekannten Schnellspannvorrichtung für Transportsterne (ohne Drehriegel) nun auch für Sortiersterne (mit Drehriegel), wodurch sich die Rüstzeit wegen des Wegfalls der bisher unverzichtbaren, umständlichen Schraubspindel weiter verkürzen läßt.

Vorteilhafterweise umfaßt die Schalteinrichtung zwei abwechselnd betätigbare, um etwa 90 Grad verschwenkbare Schaltarme, die über eine drehrichtungsumkehrende Getriebeeinrichtung miteinander um ca. 90 Grad versetzt im Eingriff stehen. Dadurch ragen beide Schaltarme in ihren jeweiligen Endstellungen, in denen sie zur Betätigung durch die Betätigungseinrichtung vorgesehen sind, in die gleiche Richtung, beispielsweise nach unten, so daß die Betätigungseinrichtung nur unterhalb des Sortiersterns erforderlich ist. Dabei kann der erste der beiden Schaltarme drehfest am Schaft befestigt und der zweite Schaltarm parallel zum Schaft im Gehäuse gelagert sein. In diesem Zusammenhang ist es möglich, daß der erste Schaltarm außerhalb des Gehäuses am inneren Schaftende befestigt und der zweite Schaltarm aus dem Gehäuse nach unten herausragend angeordnet ist.

Vorzugsweise besteht die Getriebeeinrichtung aus miteinander kämmenden Zahnrädern. Eine besonders einfache Konstruktion ergibt sich, wenn die Getriebeeinrichtung aus zwei Zahnrädern besteht, deren eines mit dem Schaft und deren anderes mit dem zweiten Schaltarm verbunden ist. Dabei kann die Zähnung des einen Zahnrades am Umfang des Schaftes und die Zähnung des anderen Zahnrades am zugeordneten Ende des zweiten Schaltarms ausgebildet sein. Vorteilhafterweise ist jedes Zahnrad ein Zahnradsegment.

Gemäß einer Weiterbildung der Erfindung umfaßt die Schalteinrichtung einen durch das Gehäuse drehfest gehaltenen, auf dem Schaft verschiebbaren Hülsenteil mit einem Innengewinde großer Steigung und ein mit diesem im Eingriff stehendes Außengewinde auf dem Schaft. Dabei kann der Hülsenteil über einen aus dem Gehäuse herausragenden, durch die Betätigungseinrichtung betätigbaren Zapfen verschiebbar sein.

Gemäß einer anderen vorteilhaften Weiterbildung der Erfindung umfaßt die Schalteinrichtung ein erstes, drehfest am inneren Schaftende befestigtes Kegelzahnrad und ein mit diesem kämmendes zweites, senkrecht dazu gelagertes Kegelzahnrad. Dabei kann das zweite Kegelzahnrad über einen angeformten, nach unten herausragenden Zapfen durch die Betätigungseinrichtung verschwenkt werden, wodurch der Schaft mit seinem Drehriegel verdreht wird.

Nachstehend ist die Erfindung unter Bezugnahme auf die beigefügten Zeichnungen näher beschrieben. Es zeigen
- Fig. 1: eine Draufsicht des in Betrieb befindlichen erfindungsgemäßen Sortiersterns in schematischer Darstellung,
- Fig. 2: eine Schnittdarstellung, die auf der linken Seite ein erstes und auf der rechten Seite ein zweites Ausführungsbeispiel des erfindungsgemäßen Sortiersterns mit einer Drehriegelvorrichtung gemäß einem ersten Ausführungsbeispiel zeigt,

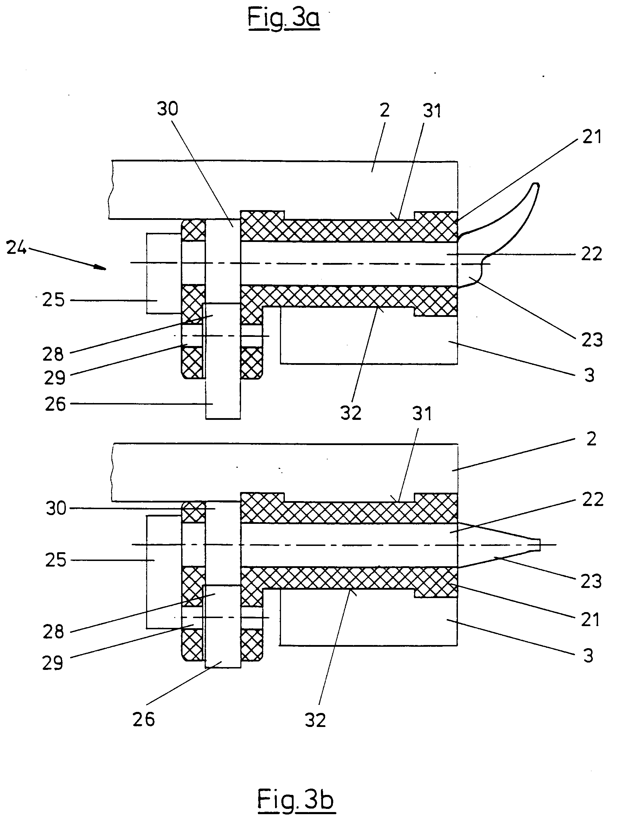

- Fig. 3a: einen Ausschnitt der äußeren Peripherie des in Fig. 2 gezeigten ersten Ausführungsbeispiels des erfindungsgemäßen Sortiersterns mit in der Außerbetriebsstellung befindlicher Drehriegelvorrichtung,
- Fig. 3b: eine der Fig. 3a entsprechende Darstellung mit in der Betriebsstellung befindlicher Drehriegelvorrichtung,

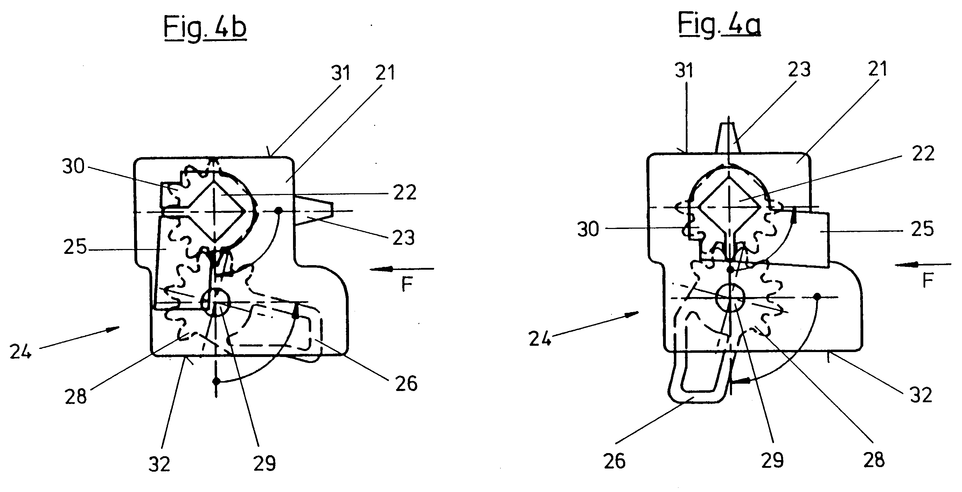

- Fig. 4a und 4b: je eine Stirnansicht der in Fig. 3a und 3b gezeigten Drehriegelvorrichtung bei Betrachtung vom Inneren des Sortiersterns radial nach außen,
- Fig. 5a und 5b: ein zweites Ausführungsbeispiel der erfindungsgemäßen Drehriegelvorrichtung in der Draufsicht bzw. im längsschnitt, und
- Fig. 6a und 6b: ein drittes Ausführungsbeispiel der erfindungsgemäßen Drehriegelvorrichtung in der Draufsicht bzw. im Längsschnitt.

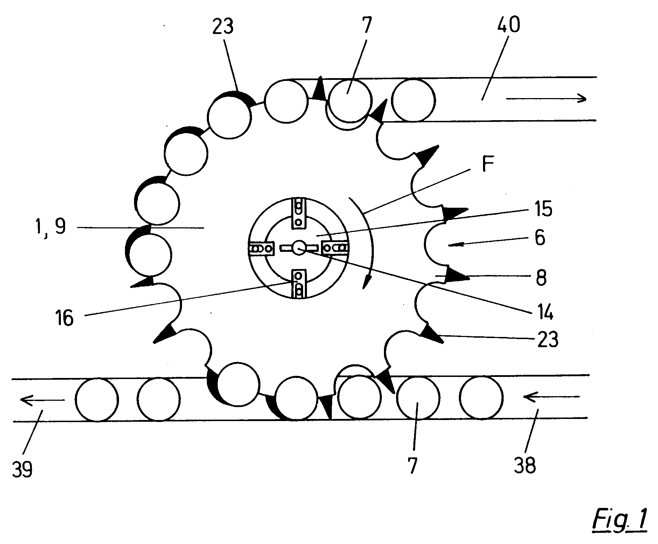

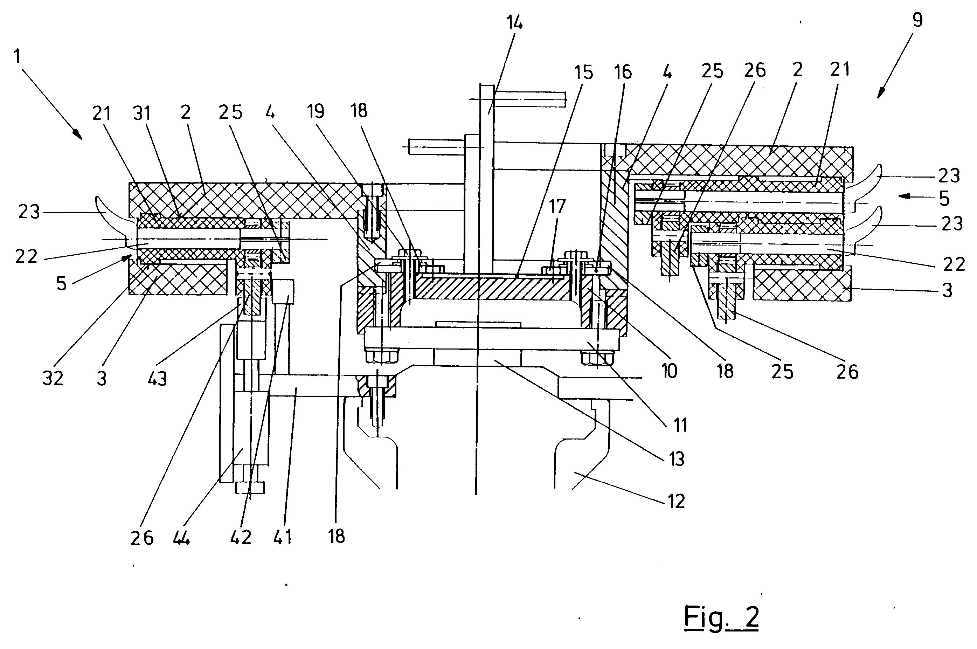

Der in Fig. 2 links gezeigte Sortierstern 1 gemäß einem ersten Ausführungsbeispiel der Erfindung umfaßt eine ringförmige obere Sternplatte 2, eine ringförmige untere Sternplatte 3, beide mit gleichem Außendurchmesser, eine Hülse 4 und eine Anzahl von Drehriegelvorrichtungen 5. Da die zentrale Öffnung der unteren Sternplatte 3 einen erheblich größeren Durchmesser als die zentrale Öffnung der oberen Sternplatte 2 aufweist, wird erstere nachstehend als Sternring bezeichnet. Etwa halbkreisförmige Aussparungen oder Taschen 6 sind gleichmäßig verteilt an der äußeren Peripherie der Sternplatte 2 und des Sternrings 3 ausgebildet und zur Aufnahme von Gefäßen 7 bestimmt. Der Radius der Taschen 6 entspricht demjenigen der Gefäße 7 (siehe Fig. 1).

Die Drehriegelvorrichtungen 5 sind zwischen der Sternplatte 2 und dem Sternring 3, diese miteinander verbindend und zentrierend, in den Bereichen 8 zwischen benachbarten Taschen 6 angeordnet.

Der in Fig. 2 rechts gezeigte Sortierstern 9 von prinzipiell gleicher Konstruktion wie der Sortierstern 1 ist für das Sortieren von Gefäßen größerer Höhe bestimmt und weist zu diesem Zweck Drehriegelvorrichtungen 5 auf, die in zwei Ebenen unmittelbar übereinander zwischen der Sternplatte 2 und dem Sternring 3 angeordnet sind. Dabei weist die jeweils obere Drehriegelvorrichtung eine größere Länge als die jeweils untere Drehriegelvorrichtung auf.

Die Hülse 4 mit einem Innendurchmesser gleich dem Durchmesser der zentralen Öffnung der Sternplatte 2 ist an letzterer zentrisch mittels Schrauben befestigt und mit ihrem gegenüberliegenden, unteren Ende auf das freie, abgestufte Ende einer Mitnehmernabe 10 aufgesetzt. Letztere ist über einen Flansch 11 mit einer aus einem Antriebswellengehäuse 12 herausragenden Antriebswelle 13 verbunden.

Zur Befestigung des Sortiersterns 1, 9 an der Mitnehmernabe 10 dient eine Schnellspannvorrichtung. Diese umfaßt eine mittels einer Handhabe 14 drehbare Drehscheibe 15, die zentrisch auf der Mitnehmernabe 10 gelagert ist, vier Schnellverschlußriegel 16, die nach Art eines Kurbeltriebs mit ihren inneren Enden schwenkbar über Bolzen 17 an der Drehscheibe 15 gelagert und mit ihren äußeren Enden zum Eingriff in Nuten 18 im Inneren der Hülse 4 vorgesehen sind. Langlöcher in den Schnellverschlußriegeln 16 sind von Führungsbolzen 19 durchsetzt, die in die Mitnehmernabe 10 eingeschraubt sind und die Führung der Schnellverschlußriegel 16 bei deren Verschwenkbewegung übernehmen.

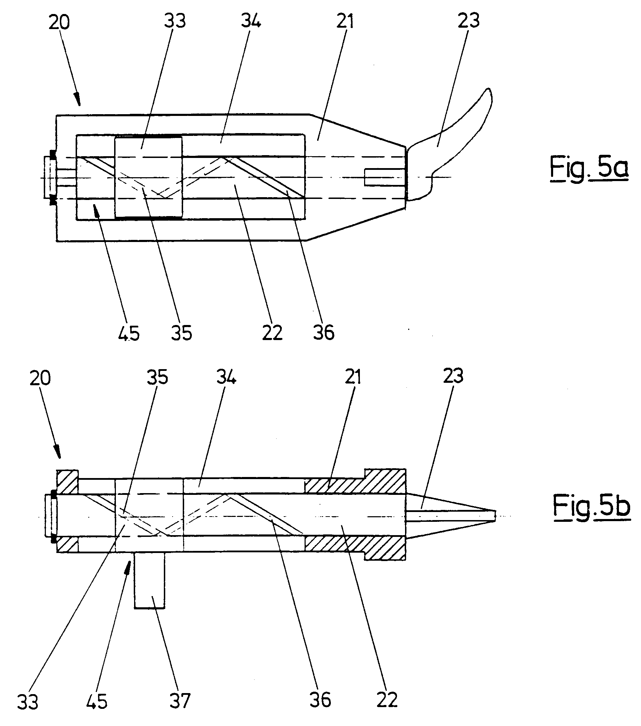

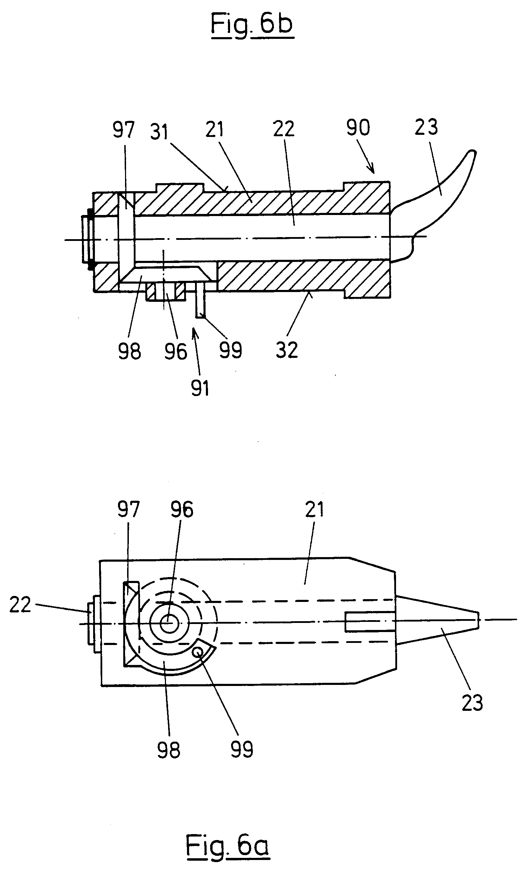

Die Drehriegelvorrichtungen 5 gemäß dem in Fig. 2 gezeigten ersten Ausführungsbeispiel sowie die in den Fig. 5a, 5b und 6a, 6b dargestellten Drehriegelvorrichtungen 20 bzw. 90 gemäß einem zweiten und dritten Ausführungsbeispiel umfassen je ein langgestrecktes Gehäuse 21 mit einer durchgehenden Lagerbohrung, einem Schaft 22, einem Drehriegel 23 und einer Schalteinrichtung. Der Schaft 22 ist in der Lagerbohrung zwischen zwei Endstellungen um etwa 90 Grad drehbar gelagert. Der Drehriegel 23 ist an dem aus der Lagerbohrung herausragenden und beide Sternplatten 2, 3 überragenden äußeren Schaftende zur Drehung mit demselben befestigt.

Die in der Drehriegelvorrichtung 5 verwendete Schalteinrichtung mit 24 bezeichnet, umfaßt einen ersten Schaltarm 25 und einen zweiten Schaltarm 26. Ersterer Schaltarm ist drehfest auf dem aus der Lagerbohrung herausragenden inneren Schaftende befestigt. Der zweite Schaltarm 26 ist in einer Öffnung auf einem zum Schaft 22 parallelen Lagerbolzen 29 angeordnet, wobei die Öffnung das Gehäuse 21 normal zur Lagerbohrung durchsetzt und in diese einmündet. An seinem der Lagerbohrung zugewandten Ende ist der zweite Schaltarm 26 mit einem Zahnradsegment 28 versehen. Mittels des Lagerbolzens 29 ist der zweite Schaltarm 26 parallel zur Lagerbohrung in zwei entsprechenden Bohrungen im Gehäuse 21 drehbar gelagert. Das Zahnradsegment 28 kämmt mit einem Zahnradsegment 30, dessen Verzahnung am Umfang des Schaftes 22, nahe dessen inneren Schaftende, ausgebildet ist.

Der Drehriegel 23 und der erste Schaltarm 25 sind derart am Schaft 22 befestigt, daß der Drehriegel 23 im wesentlichen parallel zu einer oberen Gehäusefläche 31 und zu einer unteren Gehäusefläche 32 verläuft, während gleichzeitig der erste Schaltarm 25 senkrecht steht, wenn sich der Schaft 22 in der einen Endstellung befindet. Da das Gehäuse 21 mit der oberen und der unteren Gehäusefläche 31 und 32 an der oberen Sternplatte 2 bzw. dem unteren Sternring 3 anliegt, übergreifen die Drehriegel 23 in der soeben beschriebenen Endstellung, auch Betriebsstellung genannt, die von den Taschen 6 in der Sternplatte 2 und dem Sternring 3 definierten Ausnahmeöffnungen und verhindern auf diese Weise das Austreten von Gefäßen 7 aus dieser Aufnahmeöffnung. Die Aufnahmeöffnung ist freigegeben, wenn sich der erste Schaltarm 25 und damit der Drehriegel nach einer Drehung um etwa 90 Grad in der entgegengesetzten Endstellung, auch Außerbetriebsstellung genannt, befinden. Der zweite Schaltarm 26 ist in beiden Endstellungen um etwa 90 Grad gegenüber dem ersten Schaltarm 25 versetzt.

In der Außerbetriebsstellung verläuft der Drehriegel 23 aufrecht in Richtung zur oberen Gehäusefläche 31 und der zweite ,Schaltarm 26 senkrecht in Richtung zur unteren Gehäusefläche 32, während der erste Schaltarm 25 mit im wesentlichen parallelem Verlauf zu den Sternplatten 2, 3, also liegend angeordnet ist.

In der Betriebsstellung, um 90 Grad verschwenkt, verlaufen der Drehriegel 23 und der zweite Schaltarm 26 im wesentlichen parallel zu den Sternplatten 2 und 3, d.h. liegend, während der erste Schaltarm 25 im wesentlichen senkrecht nach unten in Richtung zur unteren Gehäusefläche 32 weist.

Natürlich wäre, abweichend von der vorhergehenden Beschreibung, auch eine genau entgegengesetzte, d.h. um 90 Grad vertauschte Position der beiden Schaltarme 25 und 26 denkbar.

Die Anordnung der Schaltarme 25 und 26 in den beiden Endstellungen ergibt sich infolge des Zusammenwirkens der beiden kämmenden Zahnradsegmente 28 und 30, die eine drehrichtungsumkehrende Getriebeeinrichtung darstellen. Mit anderen Worten, bei Drehung des Schaftes 22 verschwenken beide Schaltarme 25, 26 in entgegengesetzte Richtungen, wobei sie auf etwa halbem Wege zwischen den beiden Endstellungen im wesentlichen parallel zueinander verlaufen.

Die in der Drehriegelvorrichtung 20 verwendete Schalteinrichtung 45 besteht aus einem Hülsenteil 33, der durch das Gehäuse 21 drehfest geführt, auf dem Schaft 22 verschiebbar angeordnet ist. Zur Aufnahme des Hülsenteils 33 ist das Gehäuse 21 mit einer Erweiterung 34 der Lagerbohrung zu einer Schiebeführung ausgebildet. Der Hülsenteil 33 weist ein Innengewinde 35 großer Steigung auf, welches mit einem Außengewinde 36 auf dem Schaft 22 in Eingriff steht. Der Hülsenteil 33 ragt mit einem Zapfen 37 durch die Erweiterung 34 aus dem Gehäuse 21 nach unten heraus. Durch Verschiebung des Zapfens 37 und damit des Hülsenteils 33, z.B. durch steuerbare Kurvenstücke, wird der Schaft 22 und damit der Drehriegel 23 zwischen der Betriebsstellung und der Außerbetriebsstellung hin und hergedreht (Fig. 5a und 5b).

Entsprechend dem in den Fig. 6a und 6b dargestellten Ausführungsbeispiel kann in der Drehriegelvorrichtung 90 eine Schalteinrichtung 91 verwendet werden, die aus zwei rechtwinklig zueinander angeordneten, miteinander kämmenden Kegelzahnrädern 97 und 98 besteht, wobei das erste Kegelzahnrad 97 am inneren Ende des Schaftes 22 befestigt ist, während das zweite Kegelzahnrad 98 auf einem Lagerbolzen 96 unterhalb des Schaftes 22 liegend in einer Aussparung des Gehäuses 21 drehbar gelagert ist. An dem zweiten Kegelzahnrad 98 ist ein nach unten aus dem Gehäuse 21 herausragender Zapfen 99 angeformt, der mit Hilfe einer nicht dargestellten, steuerbaren Betätigungseinrichtung, z.ß. ein bewegliches Kurvenstück, die Verschwenkung des Drehriegels 23 von einer Endstellung in die andere bewirken kann.

Der erfindungsgemäße Sortierstern 1 und 9 kann in sämtlichen Gefäßbehandlungsmaschinen einer Abfüllanlage zum Aussortieren oder Verteilen von Gefäßen eingesetzt werden, um beispielsweise verschmutzte oder beschädigte Flaschen nach einer Inspektionsmaschine ebenso auszusortieren wie nicht korrekt gefüllte bzw. unverschlossene Flaschen nach einer Füllmaschine oder nicht ordnungsgemäß etikettierte Gefäße nach einer Etikettiermaschine. Der erfindungsgemäße Sortierstern 1, 9 kann bei den genannten Gefäßbehandlungsmaschinen als Auslaufstern, oder auch als Einlaufstern zum Aussortieren von Fremdgefäßen verwendet werden. Ferner ist der Einsatz im Bereich zwischen einer Etikettier- und einer Packmaschine möglich, um den einspurig aus der Etikettiermaschine auslaufenden Gefäßstrom mehrbahnig aufzuteilen. In diesem Fall können mehrere erfindungsgemäße Sortiersterne 1, 9 hintereinander bzw. nebeneinander angeordnet werden.

Im Ausführungsbeispiel nach Fig. 1 sind dem erfindungsgemäßen Sortierstern 1, 9 drei Förderbänder 38, 39, 40 zugeordnet, die sämtlich tangential zur äußeren Peripherie des Sortiersterns verlaufen. Das Förderband 38 ist ein Zuförderband, mit dem Gefäße 7 dem Sortierstern 1, 9 zugeführt werdend. Das sich an das Zuförderband 38 mit gleichem Fördersinn anschließende Förderband 39 ist ein Sortierförderband zum Aussortieren von beispielsweise fehlerhaften Gefäßen 7. Die verbleibenden Gefäße 7 werden durch das Abförderband 40 gegenüber den vorgenannten Förderbändern 38, 39 im entgegengesetzten Fördersinn abtransportiert.

Die Betätigungseinrichtung besteht im vorliegenden Ausführungsbeispiel beim Sortierstern 1 aus zwei Nocken 42, 43, die jeweils an einem unterhalb des Sortiersterns 1 an dem Antriebswellengehäuse 12 befestigten Haltearm 41 angebracht sind. Ein steuerbarer Nocken 43 ist im Übergangsbereich vom Zuförderband 38 zum Sortierstern 1 angeordnet und zum selektiven Umschalten der Drehriegelvorrichtungen 5 von der Außerbetriebs- in die Betriebsstellung durch Beaufschlagung der zweiten Schaltarme 26 der Schalteinrichtungen 24 vorgesehen. Der zweite Nocken 42 ist im Übergangsbereich zwischen dem Sortierstern 1 und dem Abförderband 40 zum Zurückschwenken der Drehriegel 23 positioniert, um dort den Gefäßen 7 den Auslauf aus den Taschen 6 zu ermöglichen. Dieser Nocken 42 kann starr befestigt werden, d.h. er muß nicht steuerbar sein. Durch den Nocken 42 werden die Schaltarme 25 beaufschlagt, wodurch sämtliche Drehriegel 23 von der Betriebs- in die Außerbetriebsstellung verbracht werden. Dem im Bereich des Sortierförderbandes 39 und des Zuförderbandes 38 befindlichen Nocken 43 ist eine Kolben/Zylinder-Einheit 44 und dieser ein weiter nicht dargestellter Sensor zum Ermitteln von auszusortierenden Flaschen zugeordnet.

Die beschriebene Anordnung gilt sinngemäß auch für den Sortierstern 9, nur daß hier sowohl der steuerbare Nocken 43 als auch der feststehende Nocken 42 jeweils doppelt vorhanden sind. Zwecks der besseren Übersicht sind diese vier Nocken in der Fig. 2 nicht eingezeichnet.

Die Funktion des erfindungsgemäßen Sortiersterns 1, 9 ist wie folgt:
Zur Installation des erfindungsgemäßen Sortiersterns 1, 9 wird dieser mit seiner Hülse 4 derart auf die Stufe der Mitnehmernabe 10 aufgesetzt, daß nicht gezeigte Radialvorsprünge an letzterer in nicht gezeigter Einschnitte der Hülse 4 eingreifen. Dadurch ergibt sich ein für die Obertragung des Antriebsmoments erforderlicher Formschluß und eine bestimmte Winkelzuordnung zwischen Sortierstern 1, 9 und Mitnehmer 10 derart, daß die bei Drehung der Handhabe 14 und damit der Drehscheibe 15 radial nach außen verschobenen Schnellverschlußriegel 16 in Eingriff mit den Nuten 18 der Hülse 4 gelangen. Der Sortierstern 1, 9 ist auf diese Weise in axialer Richtung festgelegt. Die die Hülse 4 aufnehmende Stufe der Mitnehmernabe 10 sorgt für die radiale Fixierung und Zentrierung des Sortiersterns 1, 9.

Durch den im Übergabebereich zwischen dem Sortierstern 1, 9 und dem Abförderband 40 starr befestigten Nocken 42 werden dort alle Drehriegel 23 geöffnet und behalten diese Stellung bis zum Übergabebereich zwischen dem Zuförderband 38 und dem Sortierstern 1, 9 bei. Dort können die Drehriegel 23 zwischen die im entsprechenden Teilungsabstand ankommenden Gefäße 7 kollisionsfrei einlaufen, so daß die Gefäße 7 ungehindert in die zugeordneten Taschen 6 hineingleiten. In diesem Moment können die Drehriegel 23 von der Außerbetriebsstellung in die Betriebsstellung mittels des Nockens 43 und des zweiten Schaltarms 26 gebracht werden. Auf diese Weise werden die Gefäße 7 in den Taschen 6 bis zur Übergabe an das Abförderband 40 festgehalten. Meldet jedoch ein im Bereich des Sortiersterns 1, 9 oder der vorgeordneten Maschine stationierter Sensor ein schadhaftes, auszusortierendes Gefäß, so kann aufgrund des Sensorsignals die Kolben/Zylinder-Einheit 44 veranlaßt werden, den Nocken 43 nach unten kurzzeitig zurückzuziehen, so daß der zweite Schaltarm 26 des entsprechenden Drehriegels 23 nicht in die Betriebsstellung gebracht wird. Dies hat zur Folge, daß das beanstandete Gefäß zwar in eine Tasche 6 des Sortiersterns 1, 9 einläuft, diese jedoch sofort wieder in Richtung des Förderbands 39 verläßt. Unmittelbar danach kann der Nocken 43 wieder in den Wirkungskreis der Schaltarme 26 zurückgebracht werden, um nachfolgende, für gut befundene Gefäße zum Abförderband 40 weiterzuleiten. Dort werden alle Drehriegel 23 in bereits beschriebener Weise durch den feststehenden Nocken 42 wieder geöffnet.

In der Fig. 2 sind die beiden Nocken 42 und 43 beim Sortierstern 1 der Einfachheit halber nebeneinander eingezeichnet. Entsprechend der vorhergehenden Beschreibung versteht sich jedoch, daß die beiden Nocken 42 und 43 nicht unmittelbar nebeneinander, sondern zueinander versetzt, entsprechend der gewünschten Schaltpunkte, auf der Umlaufbahn unter dem Sortierstern montiert werden können.

## Patentansprüche

1. Sortierstern (1,9) für Gefäßbehandlungsmaschinen mit einer drehbar angeordneten Sternplatte (2,3) und an der äußeren Peripherie angeordneten Drehriegelvorrichtungen (5, 20, 90) mit je einem an der Sternplatte befestigten Gehäuse (21), das mit einer zur Peripherie der Sternplatte weisenden Lagerbohrung versehen ist, einem in der Lagerbohrung zwischen zwei Endstellungen um etwa 90 Grad drehbaren Schaft (22), einem drehfest am äußeren, aus dem Gehäuse und der äußeren Peripherie der Sternplatte herausragenden Schaftende befestigten Drehriegel (23) und einer am Schaft angreifenden, mittels einer Betätigungseinrichtung zwangsbetätigbaren Schalteinrichtung (24, 45, 91) zum Drehen des Schaftes zwischen beiden Endstellungen, dadurch gekennzeichnet, daß die Schalteinrichtung (24, 45, 91) von nur einer Seite, nämlich der Antriebsseite des Sortiersterns (1, 9) her betätigbar ist.

2. Sortierstern nach Anspruch 1, dadurch gekennzeichnet, daß die Schalteinrichtung (24) zwei abwechselnd betätigbare und um etwa 90 Grad verschwenkbare Schaltarme umfaßt, und daß die Schaltarme (25, 26) über eine drehrichtungsumkehrende Getriebeeinrichtung (28, 30) miteinander in Eingriff stehen.

3. Sortierstern nach Anspruch 2, dadurch gekennzeichnet, daß der erste (25) der beiden Schaltarme (25, 26) drehfest am Schaft (22) befestigt und der zweite Schaltarm (26) parallel zum Schaft (22) im Gehäuse (21) gelagert ist.

4. Sortierstern nach Anspruch 2 oder 3, dadurch gekennzeichnet, daß der erste Schaltarm (25) außerhalb des Gehäuses (21) am inneren Schaftende befestigt und der zweite Schaltarm (26) unterhalb des Schafts (22) aus dem Gehäuse (21) herausragend angeordnet ist.

5. Sortierstern nach wenigstens einem der Ansprüche 2 bis 4, dadurch gekennzeichnet, daß die Getriebeeinrichtung (28, 30) aus miteinander kämmenden Zahnrädern (28, 30) besteht.

6. Sortierstern nach Anspruch 5, dadurch gekennzeichnet, daß das Zahnrad (30) mit dem Schaft (22) und das Zahnrad (28) mit dem zweiten Schaltarm (26) verbunden ist.

7. Sortierstern nach Anspruch 6, dadurch gekennzeichnet, daß die Zähnung des einen Zahnrades (30) am Umfang des Schaftes (22) ausgebildet ist während der zweite Schaltarm (26) am Zahnrad (28) angeformt ist.

8. Sortierstern nach wenigstens einem der Ansprüche 5 bis 7, dadurch gekennzeichnet, daß jedes Zahnrad (28, 30) ein Zahnradsegment (28, 30) ist.

9. Sortierstern nach Anspruch 1, dadurch gekennzeichnet, daß die Schalteinrichtung (45) ein durch das Gehäuse (21) verdrehfest geführtes, auf den Schaft (22) verschiebbares Hülsenteil (33) mit einem Innengewinde (35) großer Steigung und ein mit diesem in Eingriff stehendes Außengewinde (36) auf dem Schaft (22) umfaßt.

10. Sortierstern nach Anspruch 9, dadurch gekennzeichnet, daß das Hülsenteil (33) über einen aus dem Gehäuse (21) herausragenden, durch die Betätigungseinrichtung betätigbaren Zapfen (37) verschiebbar ist.

11. Sortierstern nach Anspruch 1, dadurch gekennzeichnet, daß die Schalteinrichtung (91) ein erstes, drehfest am inneren Schaftende befestigtes Kegelzahnrad (97) und ein mit diesem kämmendes, zweites Kegelzahnrad (98) umfaßt.

12. Sortierstern nach Anspruch 11, dadurch gekennzeichnet, daß das zweite Kegelzahnrad (98) über einen angeformten, nach unten aus dem Gehäuse (21) ragenden Zapfen (99) durch die Betätigungseinrichtung betätigbar ist.

## Claims

1. Radial sorter (1, 9) for container handling machines, comprising a rotatably mounted star plate (2, 3) and, arranged on the outer periphery thereof, rotary interlock units (5, 20, 90) each with a housing (21) fixed to the star plate, said housing being provided with a bearing bore pointing towards the periphery of the star plate, and comprising a shank (22) adapted to turn through approximately 90° in the bearing bore between two extreme positions, further comprising a rotary interlock device (23) fixed in non-rotatable manner on the outer shank end which protrudes from the housing and from the outer periphery of the star plate, and also comprising a switching device (24, 45, 91) which acts on the shank and is adapted to be positively actuated by means of an actuating device, for turning the shank between the two extreme positions,
characterised in that the switching device (24, 45, 91) can only be actuated from one side, namely the driving side of the radial sorter (1, 9).

2. Radial sorter according to claim 1, characterised in that the switching device (24) includes two switching arms adapted to be alternately actuated and swivelled through approximately 90 degrees, and in that the switching arms (25, 26) are in engagement with one another by means of a rotational-direction-reversing gear system (28, 30).

3. Radial sorter according to claim 2, characterised in that the first (25) of the two switching arms (25, 26) is fixed in non-rotatable manner to the shank (22) and the second switching arm (26) is mounted parallel to the shank (22) in the housing (21).

4. Radial sorter according to claim 2 or 3, characterised in that the first switching arm (25) is fixed outside the housing (21) to the inner shank end and the second switching arm (26) is arranged below the shank (22) so as to protrude from the housing (21).

5. Radial sorter according to at least one of claims 2 to 4, characterised in that the gear system (28, 30) consists of intermeshing toothed gears (28, 30).

6. Radial sorter according to claim 5, characterised in that toothed gear (30) is joined to the shank (22) and toothed gear (28) to the second switching arm (26).

7. Radial sorter according to claim 6, characterised in that the teeth of one toothed gear (30) are formed on the circumference of the shank (22) while the second switching arm (26) is moulded onto toothed gear (28).

8. Radial sorter according to at least one of claims 5 to 7, characterised in that each toothed gear (28, 30) is a segment gear (28, 30).

9. Radial sorter according to claim 1, characterised in that the switching device (45) includes a sleeve part (33) which passes non-rotatably through the housing (21) and can be moved onto the shank (22) and which has an internal thread (35) with a large pitch, and on the shank (22) an external thread (36) which is in engagement with said internal thread (35).

10. Radial sorter according to claim 9, characterised in that the sleeve part (33) is adapted to be moved over a pin (37) which protrudes from the housing (21) and can be actuated by the actuating device.

11. Radial sorter according to claim 1, characterised in that the switching device (91) includes a first bevel gear (97) fixed in non-rotatable manner on the inner shank end and a second bevel gear (98) which meshes with said first bevel gear.

12. Radial sorter according to claim 11, characterised in that the second bevel gear (98) can be actuated by the actuating device via a moulded pin (99) which projects down out of the housing (21).

## Revendications

1. Etoile de triage (1, 9) pour des machines de traitement de récipients, comportant une plaque en étoile (2, 3) avec des dispositifs de verrou tournant (5, 20, 90) prévus à leur périphérie extérieure, et un carter (21) respectif fixé à la plaque en étoile, ce carter étant muni d'un alésage de palier tourné vers la périphérie de la plaque en étoile, d'un axe (22) susceptible de tourner d'environ 90° entre deux positions de fin de course, dans l'alésage de palier, d'un verrou tournant (23) fixé solidairement en rotation à l'extrémité de l'axe dépassant du carter et de la périphérie extérieure de la plaque en étoile et d'une installation de commutation (24, 45, 91) agissant sur l'axe et commandée de force par une installation de manoeuvre pour tourner l'axe entre ses deux positions de fin de course, étoile de triage caractérisée en ce que l'installation de commutation (24, 45, 91) ne peut être manoeuvrée que d'un côté de l'étoile de triage (1, 9) à savoir du côté de son entraînement.

2. Etoile de triage selon la revendication 1, caractérisée en ce que l'installation de commutation (24) comprend deux bras de commutation actionnés en alternance et qui peuvent pivoter d'environ 90° et les bras de commutation (25, 26) sont en prise l'un avec l'autre par l'intermédiaire d'une transmission inversant le sens de rotation (28, 30).

3. Etoile de triage selon la revendication 2, caractérisée en ce que le premier (25) des deux bras de commutation (25, 26) est fixé solidairement en rotation à l'axe (22) et le second bras de commutation (26) est monté dans le carter (21), parallèlement à l'axe (22).

4. Etoile de triage selon la revendication 2 ou 3, caractérisée en ce que le premier bras de commutation (25) est fixé à l'extérieur du carter (21), sur l'extrémité intérieure de l'axe et le second bras de commutation (26) est prévu sous l'axe (22) en saillie du carter (21).

5. Etoile de triage selon au moins l'une des revendications 2 à 4, caractérisée en ce que la transmission (28, 30) se compose de deux roues dentées (28, 30) engrenant l'une avec l'autre.

6. Etoile de triage selon la revendication 5, caractérisée en ce que la roue dentée (30) est reliée à l'axe (22) et la roue dentée (28) est reliée au second bras de commutation (26).

7. Etoile de triage selon la revendication 6, caractérisée en ce que la denture de l'une des roues dentées (30) est réalisée à la périphérie de l'axe (22) et le second bras de commutation (26) est formé sur la roue dentée (28).

8. Etoile de triage selon au moins l'une des revendications 5 à 7, caractérisée en ce que chaque roue dentée (28, 30) est un segment de roue dentée (28, 30).

9. Etoile de triage selon la revendication 1, caractérisée en ce que l'installation de commutation (45) est une partie de manchon (33) guidée solidairement en rotation à travers le carter (21), ce manchon, coulissant sur l'axe (22) ayant un filetage intérieur (35) de pas important en prise avec un filetage extérieur (36) de l'axe (22).

10. Etoile de triage selon la revendication 9, caractérisée en ce que la partie de manchon (33) peut être coulissée par un téton (37) en saillie du carter (21) et manoeuvré par l'installation de manoeuvre.

11. Etoile de triage selon la revendication 1, caractérisée en ce que l'installation de commutation (91) comprend une première roue conique dentée ((97) fixée solidairement en rotation sur l'extrémité intérieure de l'axe et une seconde roue conique dentée (98) engrenant avec l'autre roue dentée.

12. Etoile de triage selon la revendication 11, caractérisée en ce que la seconde roue conique dentée (98) peut être manoeuvrée par l'installation de manoeuvre agissant sur un téton (99) formé sur cette roue dentée et qui est en saillie en dessous du carter (21).
